# EUROPÄISCHE PATENTSCHRIFT

(11) **EP 0 432 512 B1**
(45) Veröffentlichungstag und Bekanntmachung des Hinweises auf die Patenterteilung: **15.12.1993**
(21) Anmeldenummer: 90122001.2
(22) Anmeldetag: 17.11.1990
(51) Int. Cl.: B23D 15/00, B23D 35/00, B23D 31/00

(54) **Messerhalterung am Messerschlitten einer Schrottschere**
Blade-holder on a carriage in a shearing machine for scrap-metal
Porte-lame pour le chariot d'une machine à cisaillage de ferraille

(30) Priorität: 09.12.1989 DE 3940717
(43) Veröffentlichungstag der Anmeldung: 19.06.1991
(73) Patentinhaber: THYSSEN INDUSTRIE AG, 45128 Essen (DE)
(72) Erfinder: Manschwetus, Helmut, W-3501 Fuldabrück 1 (DE)

(56) Entgegenhaltungen:
- DE-A- 2 149 866
- DE-B- 1 141 512
- GB-A- 938 279
- US-A- 3 046 825

## Beschreibung

Die Erfindung betrifft eine Messerhalterung am Messerschlitten einer Schrottschere nach den Merkmalen des Oberbegriffs des Anspruchs 1.

Eine Messerhalterung, bei der das Messer auswechselbar in einem Futterstück aus gehärtetem Stahl sitzt und bei der die Messerbolzen vor Querbelastungen durch Entlastungsbuchsen geschützt sind, beschreibt die Firmendruckschrift
THYSSEN HENSCHEL
Henschel-Schrottaufbereitungsanlagen
Report 2/87
Maschinen, Anlagen und Verfahren für die Schrottaufbereitung.

Die dort dargestellten Entlastungsbuchsen entsprechen den im Oberbegriff des Hauptanspruchs genannten Hülsen. Sie bestehen aus gehärtetem Stahl und sind dünnwandig und ungeschlitzt. Der Außendurchmesser und der Innendurchmesser der Hülsen sind so gewählt, daß sowohl gegenüber den Aufnahmebohrungen im Messer und im Futterstück als auch dem Außendurchmesser des Messerbolzens jeweils ein geringes Spiel besteht. Das äußere Spiel ist dabei in seiner Größe so gewählt, daß die Scherkraft ohne Beaufschlagung der Hülsen vom Messer auf das Futterstück übertragen wird.

Bei derartigen Messerhalterungen treten bei schräg angestellten Messern auch seitlich wirkende Schnittkraftkomponenten und beim Hochfahren des Messerschlittens vorwiegend senkrecht wirkende Abstreifkräfte aus der Reibung zwischen Messer und im Vorschubkanal befindlichem Schrott auf. Mit den konzentrisch zum Schraubenschaft angeordneten Hülsen werden die Messerbefestigungsschrauben von den genannten Kräften entlastet.

Das Aus- und Einbauen der Messer ist bei einer derartigen Messerhalterung bei eingebaut verbleibendem Messerschlitten nur in Längsrichtung der den Formschluß sichernden Hülsen, also in Richtung auf den Vorschubkanal der Schrottschere, möglich. Dazu ist es jedoch erforderlich, die von den Enden des Messers überdeckten seitlichen Schleißplatten des Vorschubkanals auszubauen, um den notwendigen seitlichen Freigang für den Messerausbau herzustellen. Das Abbauen und das nach erfolgtem Messerwechsel notwendige erneute Anbauen der Schleißplatten an den Wänden des Vorschubkanals ist sehr zeitaufwendig. Hinzu kommt, daß sich das Messer nach dem Entfernen der Messerbefestigungsschrauben wegen der im Betrieb unvermeidlichen Verformungen des Messers und der Messerhalterungsflächen im Messerschlitten bzw. Verformungen an den Messerunterlagen nicht ohne erhebliche Kraftanwendung aus der Messerhalterung lösen lassen.

Der Erfindung liegt die Aufgabe zugrunde, eine Messerhalterung der im Oberbegriff des Patentanspruchs 1 genannten Art so zu gestalten, daß unter Beibehaltung der Hülsen für die formschlüssige Lagesicherung der Messer ein Aus- und Wiedereinbau der Messer ohne Abbau der seitlichen Schleißplatten des Vorschubkanals ermöglicht wird.

Diese Aufgabe wird mit den kennzeichnenden Merkmalen des Patentanspruchs 1 gelöst.

Der mit der Erfindung erzielte Vorteil besteht darin, daß sich nach dem Lösen der Messerbefestigungsmuttern und dem Ausbau der Messerbefestigungsschrauben die den Formschluß zwischen Messer und Messerschlitten bzw. Messerunterlage sichernden Hülsen aus der rückwärtigen Messeranlageebene heraus in Richtung Messerschlittenrückseite verschieben lassen. Dadurch kann nun das Messer nach unten ausgebaut werden, ohne einen Abbau der seitlichen Schleißplatten des Vorschubkanals vornehmen zu müssen.

Die Ausgestaltung der Erfindung nach dem kennzeichnenden Merkmal des Patentanspruchs 2 ermöglicht ein Zurückziehen der den Formschluß sichernden Hülse, ohne daß durch die Schraubenkopföffnung des Messers ein zusätzliches Werkzeug zum Verschieben der Hülse in Richtung Messerschlittenrückseite eingeführt werden muß.

Um den nunmehr nach unten möglichen Ausbau eines einteiligen Messers noch weiter zu erleichtern, erfolgt eine Gestaltung des Messers nach den kennzeichnen den Merkmalen der Patentansprüche 3 und 5.

Zur Erleichterung des Ausbaues von zweiteiligen Messern dienen die kennzeichnenden Merkmale der Patentansprüche 4 und 5.

Ausführungsbeispiele der Erfindung sind in der Zeichnung dargestellt und werden im folgenden näher beschrieben.

Es zeigt
- Fig. 1: die Frontansicht einer Schrottschere mit senkrecht geführtem Messerschlitten,
- Fig. 2: den Schnitt A-A' durch die Messerbefestigung am Messerschlitten gemäß Fig. 1,
- Fig. 3: den Schnitt B-B' durch die Messerbefestigung am Messerschlitten gemäß Fig. 2,
- Fig. 4: einen Schnitt wie Fig. 3, jedoch ohne Messerbefestigungsschraube und mit zurückgeschobener Hülse,
- Fig. 5: die Frontansicht der Messerbefestigung am Messerschlitten mit einem einteiligen schräg angestellten Messer,
- Fig. 6: die Frontansicht der Messerbefestigung am Messerschlitten mit einem zweiteiligen schräg angestellten Messer.

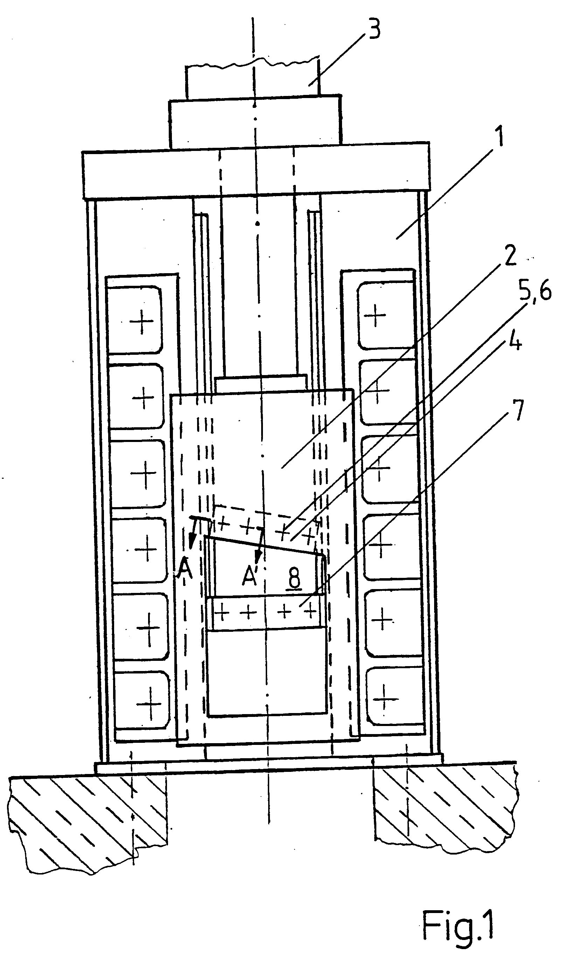

Bei der Schrottschere gem. Fig. 1 ist an oder in einem Scherenständer 1 in nicht näher dargestellten Führungen der Messerschlitten 2, der von einem Hydraulikzylinder 3 angetrieben wird, senkrecht geführt.

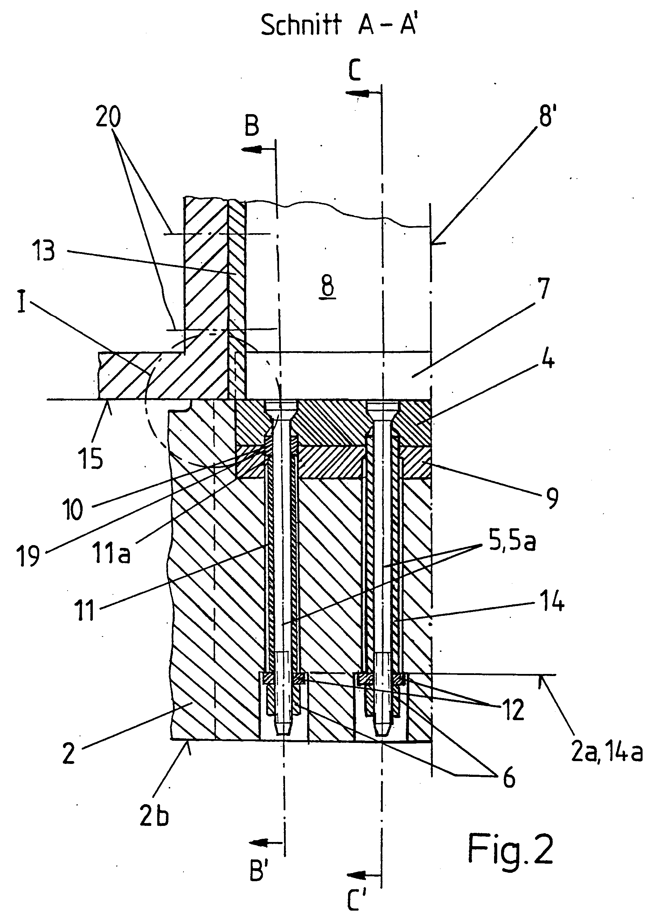

Am Messerschlitten 2 ist das Messer 4 durch in Fig. 1 nicht näher dargestellte Messerbefestigungsschrauben 5 und Messerbefestigungsmuttern 6 befestigt (siehe Fig. 2). Das Messer 4 (= Obermesser) wirkt mit dem bodenseitig an der Stirnseite des Vorschubkanals 8 angebrachten Messer 7 (=Untermesser) zusammen.

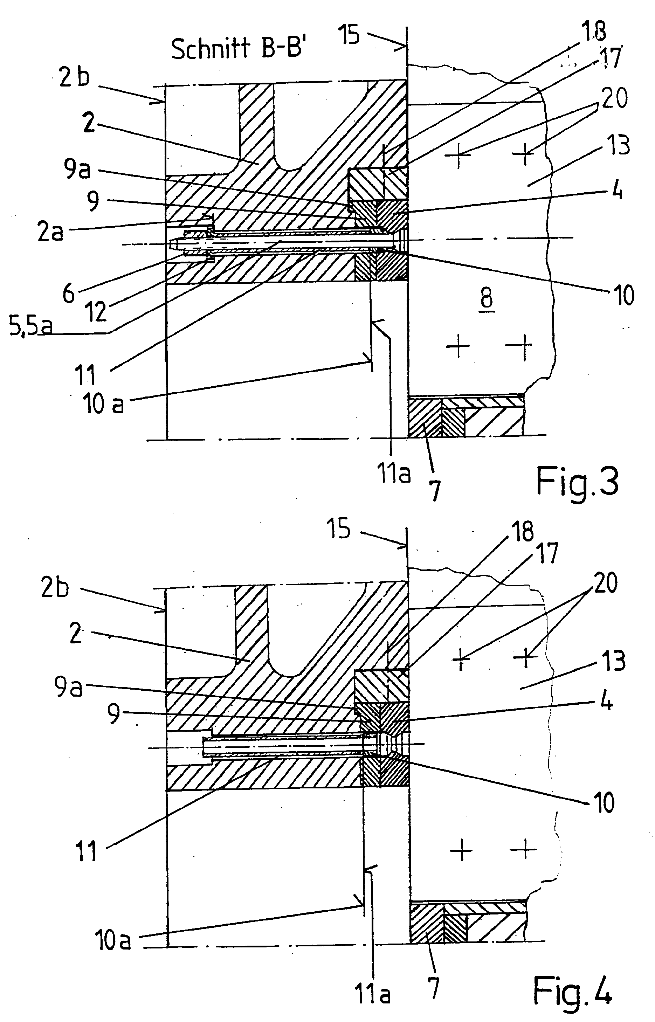

Einzelheiten der Messerbefestigung zeigt die Fig. 2 mit dem Schnitt A-A' von Fig. 1 in vergrößerter Darstellung. Aus Vereinfachungsgründen ist in Fig. 2 nur ein bis zur senkrechten Längsmittenebene 8' des Vorschubkanals 8 reichender Teilausschnitt des Messerschlittens 2 dargestellt. Das bis zur Scherebene 15 reichende und dort mit dem Messer 7 (Untermesser) zusammenwirkende Messer 4 (Obermesser) ist mit mehreren Messerbefestigungsschrauben 5 und von der Messerschlittenrückseite 2b her zugänglichen Messerbefestigungsmuttern 6 am Messerschlitten 2 befestigt, wobei im Ausführungsbeispiel zwischen Messer 4 und Messerschlitten 2 eine Messerunterlage 9 vorhanden ist. Diese rückwärtige Messerunterlage 9 ist, wie aus Fig. 3 und Fig. 4 ersichtlich, gegen Verschieben nach unten durch einen oben an ihrer Rückseite befindlichen Vorsprung 9a gesichert, der in eine entsprechende Aussparung des Messerschlittens 2 eingreift. Die rückwärtige Messerunterlage 9 und das Messer 4 sind nach oben durch die obere Messerunterlage 17 in der in Fig. 3 und Fig. 4 dargestellten Ausnehmung des Messerschlittens abgestützt. Die obere Messerunterlage 17 ist mit Schrauben 18 am Messerschlitten 2 befestigt.
Konzentrisch zu den Messerbefestigungsschrauben 5 sind jeweils kurze Hülsen 10 angeordnet, die in der in Fig. 2 und Fig. 3 dargestellten betriebsbereiten Stellung des Messerschlittens 2 gleichzeitig einerseits in entsprechende konzentrische Ansenkungen in der rückwärtigen Anlagefläche des Messers 4 und andererseits in die konzentrisch vergrößerte runde Durchgangsöffnung 19 für den Schraubenschaft 5a in der rückwärtigen Messerunterlage 9 ragen. Die kurzen Hülsen 10 sichern den Formschluß zwischen dem Messer 4 und der Messerunterlage 9 in der rückwärtigen Messeranlageebene. Als Anschlag gegen Verschieben der kurzen Hülse 10 in Längsrichtung der Messerbefestigungsschraube 5 dienen einerseits die Stirnfläche der Ansenkung in der rückwärtigen Anlagefläche des Messers 4 und andererseits die zum Messer 4 gerichtete Stirnseite 11a der langen Abstandshülse 11, deren rückwärtiges Ende bis zur messerschlittenseitigen Auflageebene 2a der unter der Messerbefestigungsmutter 6 befindlichen dicken Unterlegscheibe 12 reicht.

Wie aus der Einzelheit I in Fig. 2 ersichtlich, überdecken die seitlichen Enden des Messers 4 die Stirnseiten der seitlichen Schleißplatten 13 des Vorschubkanals 8. Diese Überdeckung ist erforderlich, um Kantenausbrüche am Messer 4 zu verhindern. Um das Messer 4 ohne Abbau der mit Schrauben 20 befestigten seitlichen Schleißplatten 13 nach unten ausbauen zu können, wird nach dem Lösen der Messerbefestigungsmutter 6 und dem Herausnehmen der Messerbefestigungsschraube 5 in Richtung Vorschubkanal 8 die kurze Hülse 10 in Richtung Messerschlittenrückseite soweit zurückgeschoben bis der Formschluß zwischen dem Messer 4 und der rückwärtigen Messerunterlage 9 aufgehoben ist.

In Fig. 4 ist die zurückgeschobene Stellung der kurzen Hülse 10 dargestellt. Anstelle einer kurzen Hülse 10 mit daran anliegender langer Abstandshülse 11, wie in Fig. 2 mit Schnitt B-B' dargestellt, kann auch jeweils eine durchgehende lange Hülse 14 entsprechend der Darstellung im Schnitt C-C' von Fig. 2 verwendet werden. Eine derartige Lösung gestattet es, den Formschluß zwischen dem Messer 4 und der rückwärtigen Messerunterlage 9 durch Zurückziehen der langen Hülse 14 aufzuheben.

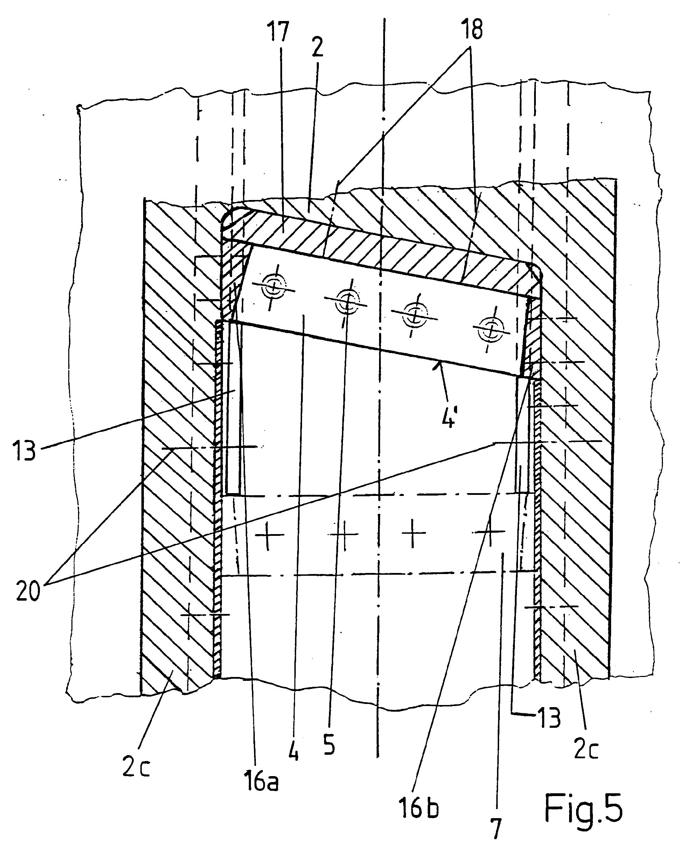

Um den Ausbau eines schräg angestellten einteiligen Messers 4 nach unten noch weiter zu erleichtern, erhält das Messer 4 parallel zur Scherebene 15 eine Trapezform (siehe Fig. 5), wobei die längere Seite 4' des Trapzes nach unten weist. Zur seitlichen Abstützung des Messers 4 dienen keilförmige Füllstücke 16a, 16b, die an den Längsstegen 2b des Messerschlittens 2 mit nicht näher bezeichneten Schrauben befestigt sind.

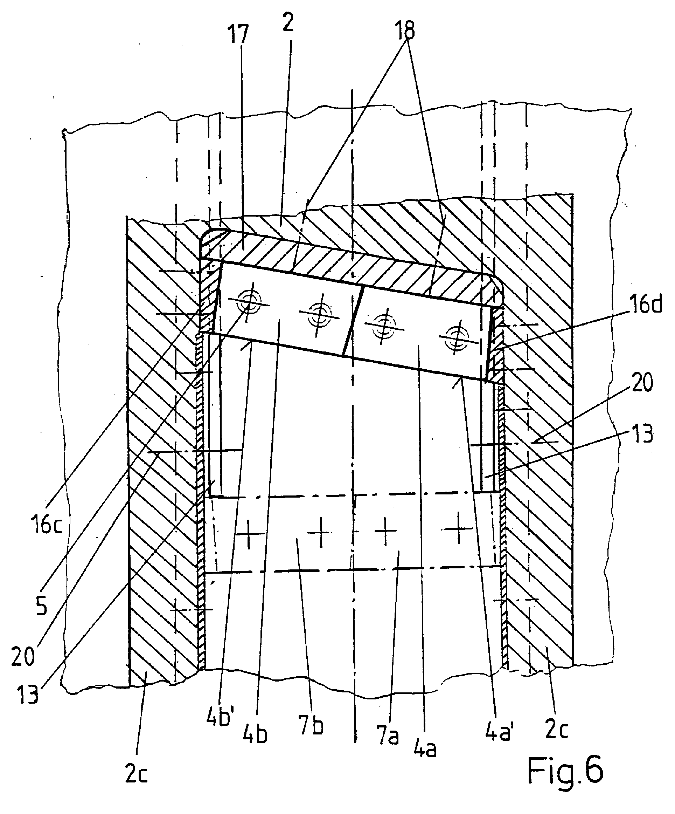

Um den Ausbau eines schräg angestellten zweiteiligen Messers 4a, 4b, (siehe Fig. 6) zu erleichtern, erhalten beide Messer 4a, 4b parallel zur Scherebene 15 eine Trapezform. Bei dem in Scherrichtung vorlaufenden Messer 4a weist die längere Seite 4a' des Trapezes nach unten. Bei dem danebenliegenden, in Scherrichtung nachlaufenden Messer 4b weist die kürzere Seite 4b' des Trapezes nach unten. Beide Schermesser 4a und 4b zusammen ergeben somit ein Parallelogramm. Auch bei dieser Messerbefestigung erfolgt eine seitliche Abstützung durch keilförmige Füllstücke 16c, 16d, die an den Längsstegen 2_{c} des Messerschlittens 2 mit nicht näher bezeichneten Schrauben befestigt sind.

Beim Messerausbau wird das in Scherrichtung vorlaufende Messer 4a jeweils zuerst ausgebaut.

Wie die Obermesser 4, 4a und 4b, sind in den Ausführungsbeispielen gemäss Fig. 5 und Fig. 6 auch die jeweiligen Untermesser 7 bzw. 7a, 7b trapezförmig gestaltet, um gleiche Bauteile zu haben und damit die Bevorratung von Ersatzmessern zu vereinfachen.

## Patentansprüche

1. Messerhalterung am Messerschlitten einer Schrottschere, bei der das schräg angestellte Messer in einer Ausnehmung des Messerschlittens (2) mit Schrauben und Muttern befestigt und mit jeweils konzentrisch zum Schraubenschaft (5a) angeordneten kurzen Hülsen (10), die einerseits in Ansenkungen in der rückwärtigen Anlagefläche des Messers und andererseits in Ansenkungen in der senkrechten Messeranlagefläche des Messerschlittens (2) oder einer am Messerschlitten (2) befestigten Messerunterlage (9) bis nahe an die Stirnseiten der Ansenkungen ragen, formschlüssig gegen Verschieben in der rückwärtigen Messeranlageebene gesichert ist, dadurch gekennzeichnet, daß in der betriebsbereiten Stellung die den Formschluß zwischen Messer (4, 4a, 4b) und Messerschlitten (2) oder Messerunterlage(9) sichernden kurzen Hülsen (10) jeweils mit ihrer messerschlittenseitigen Stirnfläche (10a) an der zum Messer gerichteten Stirnfläche (11a) einer konzentrisch zum Schraubenschaft (5a) der Messerbefestigungsschraube (5) angeordneten und durch die Messerbefestigungsmutter (6) gehaltenen langen Abstandshülse (11) anliegen und daß beim Ausbau des Messers (4, 4a, 4b) nach dem Lösen der Messerbefestigungsmutter (6) und nach dem Herausnehmen der Messerbefestigungsschraube (5) in Richtung Vorschubkanal (8) die kurze Hülse (10) gemeinsam mit der langen Abstandshülse (11) mit einem nicht näher bezeichneten, durch die Schraubenkopföffnung des Messers eingeführtes Werkzeug soweit in Richtung Messerschlittenrückseite verschoben wird bis sich die kurze Hülse (10) außerhalb der rückwärtigen Messeranlageebene befindet und somit die Sicherung des Formschlusses zwischen Messer und Messerunterlage oder Messerschlitten aufgehoben ist.

2. Messerhalterung nach Anspruch 1, dadurch gekennzeichnet, daß die den Formschluß zwischen Messer (4) und Messerschlitten (2) oder Messerunterlage (9) sichernden langen Hülsen (14) mit ihrer messerschlittenseitigen Stirnfläche (14a) über die rückwärtige Messeranlageebene hinaus bis an die Auflageebene (2a) für die Messerbefestigungsmutter (6) oder deren Unterlegscheibe (12) reichen.

3. Messerhalterung nach den Ansprüchen 1 und 2, dadurch gekennzeichnet, daß das schräg angestellte einteilige Messer (4) parallel zur Scherebene (15) eine Trapezform aufweist und mit der längeren Seite des Trapezes nach unten weist.

4. Messerhalterung nach den Ansprüchen 1 und 2, dadurch gekennzeichnet, daß das schräg angestellte zweiteilige Messer aus zwei nebeneinander angeordneten, parallel zur Scherebene (15) Trapezform aufweisenden Messern (4a und 4b) besteht, von denen das in Scherrichtung vorlaufende Messer (4a) mit der längeren Seite des Trapezes und das danebenliegende, in Scherrichtung nachlaufende Messer (4b) mit der kürzeren Seite des Trapezes nach unten weist.

5. Messerhalterung nach den Ansprüchen 3 und 4, dadurch gekennzeichnet, daß zwischen den seitlichen Stirnseiten der Messer (4, 4a, 4b) und den Längsstegen (2c) des Messerschlittens keilförmige Füllstücke (16a, 16b, 16c, 16d) angeordnet sind, die an den Längsstegen (2c) befestigt sind.

## Claims

1. Knife mounting on the knife carriage of a scrap cutter, in which the knife set at an angle is fixed in a recess of the knife carriage (2) with bolts and nuts and is positively secured against displacement in the rear knife bearing plane with short sleeves (10), each arranged concentrically to the bolt barrel (5a), which project on the one hand in counterbores in the rear bearing surface of the knife and on the other hand in counterbores in the vertical knife bearing surface of the knife carriage (2) or a knife backing (9) fixed to the knife carriage (2) as far as adjacent to the front faces of the counterbores, characterized in that in the operative position the short sleeves (10) ensuring the positive locking between knives (4, 4a, 4b) and knife carriage (2) or knife backing (9) each rest with their front face (10a) on the knife carriage side on the front face (11a) facing the knife of a long distance sleeve (11) arranged concentrically to the bolt barrel (5a) of the knife fixing bolt (5) and held by the knife fixing nut (6) and that when the knife (4, 4a, 4b) is removed after loosening the knife fixing nut (6) and after removing the knife fixing bolt (5) in the direction of the feed channel (8) the short sleeve (10) together with the long distance sleeve (11) is pushed, with a tool introduced through the bolt head opening of the knife and not designated in greater detail, in the direction of the back of the knife carriage until the short sleeve (10) is outside the rear knife bearing plane and the securing of the positive locking between knife and knife backing or knife carriage is thereby removed.

2. Knife mounting according to Claim 1, characterized in that the long sleeves (14) assuring the positive locking between knife (4) and knife carriage (2) or knife backing (9) extend with their front face (14a) on the knife carriage side beyond the rear knife bearing plane as far as the bearing surface (2a) for the knife fixing nut (6) or its washer (12).

3. Knife mounting according to Claims 1 and 2, characterized in that the one-piece knife (4) set at an angle has a trapezoidal shape parallel to the cutting plane (15) and points downwards with the longer side of the trapezium.

4. Knife mounting according to Claims 1 and 2, characterized in that the two-piece knife set at an angle comprises two knives (4a and 4b) arranged next to one another and having a trapezoidal shape parallel to the cutting plane (15), of which the knife (4a) advancing in the cutting direction points downwards with the longer side of the trapezium and the adjacent knife (4b) following on in the cutting direction points downwards with the shorter side of the trapezium.

5. Knife mounting according to Claims 3 and 4, characterized in that wedge-shaped filling pieces (16a, 16b, 16c, 16d) which are fixed to the longitudinal webs (2c) are arranged between the lateral front faces of the knives (4, 4a, 4b) and the longitudinal webs (2c) of the knife carriage.

## Revendications

1. Dispositif de fixation d'une lame (ou porte-lame) sur le coulisseau d'une cisaille à riblons, dans lequel la lame, disposée obliquement, est fixée dans un décrochement de ce coulisseau (2) au moyen de vis et d'écrous et est empêchée positivement de se déplacer dans son plan postérieur vertical d'appui grâce à des douilles courtes (10) qui sont disposées concentriquement à la tige (5a) de la vis de fixation (5) respective et qui pénètrent d'un côté dans un chambrage respectif de cette face postérieure d'appui de la lame et de l'autre côté dans un chambrage respectif de la surface verticale d'appui pour la lame, formée sur le coulisseau (2) ou sur une cale (9) fixée à ce coulisseau (2), presque jusqu'au fond de ces chambrages, dispositif caractérisé en ce que, dans la position de service, chacune des douilles courtes (10) qui assurent l'ajustement positif entre la lame (4, 4a, 4b) et le coulisseau (2) ou la cale (9) de cette lame est appliquée par son extrémité (10a) adjacente à ce coulisseau contre l'extrémité (11a) adjacente à la lame d'une longue douille-entretoise (11), disposée concentriquement à la queue (5a) de la vis (5) respective de fixation de cette lame et retenue par l'écrou (6) de fixation et en ce que, au démontage de la lame (4, 4a, 4b), lorsque l'écrou (6) a été dévissé et que la vis (5) a été retirée du côté du canal d'amenée (8), l'ensemble de la douille courte (10) et de la longue douille-entretoise (11) est repoussé vers la face postérieure du coulisseau (2), à l'aide d'un outil introduit dans le chambrage de la lame destiné à loger la tête de la vis, jusqu'à ce que cette douille courte (10) se trouve écartée du plan de la face postérieure d'appui de la lame et que, par conséquent, l'ajustement positif par concordance de forme entre cette lame et sa cale ou ce coulisseau soit supprimé.

2. Dispositif de fixation selon la revendication 1, caractérisé en ce que l'extrémité (14a) adjacente au coulisseau (2) des longues douilles (14) qui assurent l'ajustement positif entre la lame (4) et ce coulisseau (2) ou la cale (9) dépasse le plan de la face postérieure d'appui de la lame et va jusqu'au plan (2a) d'appui de l'écrou (6) ou de sa rondelle (12).

3. Dispositif de fixation selon les revendications 1 et 2, caractérisé en ce que la lame monobloc (4) disposée obliquement présente, parallèlement au plan de cisaillement (15), la forme d'un trapèze, dont le grand côté est en bas.

4. Dispositif de fixation selon les revendications 1 et 2, caractérisé en ce que la lame en deux parties, disposée obliquement, est formée de deux lames (4a, 4b) disposées côte à côte et ayant, parallèlement au plan de cisaillement (15), en forme de trapèzes, le grand côté du trapèze de la lame (4a), qui est en avance dans le sens du cisaillement, étant en bas et le petit côté du trapèze de la lame (4b) adjacente, qui suit dans le sens du cisaillement, étant en bas.

5. Dispositif de cisaillement selon les revendications 3 et 4, caractérisé en ce que des pièces intercalaires (16a, 16b, 16c, 16d) cunéiformes sont disposées entre les bords latéraux des lames (4, 4a, 4b) et les grands côtés (2c) du coulisseau (2) et sont fixées à ces grands côtés (2c).
